# EUROPÄISCHE PATENTANMELDUNG

(11) **EP 4 424 402 A2**
(43) Veröffentlichungstag der Anmeldung: **04.09.2024**
(21) Anmeldenummer: 24189929.3
(22) Anmeldetag: 14.10.2020
(51) Int. Cl.: B01D 46/00

(54) **ADAPTERELEMENT SOWIE HALTEVORRICHTUNG FÜR EIN LUFTENTÖLELEMENT EINER VAKUUMPUMPE**

(62) Teilanmeldung aus: 20793308.6
(71) Anmelder: Busch Produktions GmbH, 79689 Maulburg (DE)
(72) Erfinder: PAUL, Andreas, 79689 Maulburg (DE); SACHS, Ronald, 79650 Schopfheim (DE); POSNIAK, Marcus, 79713 Bad Säckingen (DE); SÖLL, Rainer, 79650 Schopfheim (DE)
(74) Vertreter: BOVARD AG

(57) **Zusammenfassung**

Die vorliegende Erfindung bezieht sich auf ein Adapterelement (11) für eine Haltervorrichtung für ein Luftentölelement einer Vakuumpumpe (1), umfassend einen ersten zylindrischen Abschnitt (11a) mit einem ersten Durchmesser und einen zur Aufnahme des Luftentölelements (2) ausgebildeten zweiten zylindrischen Abschnitt (11b) mit einem zweiten Durchmesser, wobei der erste Durchmesser gleich oder kleiner als der zweite Durchmesser ist und wobei der zweite zylindrische Abschnitt (11b) umlaufende Aussparungen aufweist, die mindestens drei parallel zur Längsachse des Adapterelements ausgerichtete, gleichmässig oder ungleichmässig über den Umfang des zweiten zylindrischen Abschnitts (11b) verteilte, Fixierungsfinger (11e) bilden, wobei mindestens zwei Fixierungsfinger (11f) elastisch radial verschiebbar gelagert sind. Die vorliegende Erfindung betrifft ausserdem auch eine Haltevorrichtung (10) für ein Luftentölelement (2) einer Vakuumpumpe (1), insbesondere einer Ölvakuumpumpe.

## Beschreibung

### Technisches Gebiet der Erfindung

Die vorliegende Erfindung bezieht sich auf ein Adapterelement für eine Haltevorrichtung für ein Luftentölelement einer Vakuumpumpe, insbesondere einer ölgedichteten Vakuumpumpe, im Weiteren Ölvakuumpumpe genannt. Die vorliegende Erfindung bezieht sich ausserdem auch auf eine Haltevorrichtung für ein Luftentölelement einer Vakuumpumpe. Die vorliegende Erfindung betrifft spezifisch ein solches Adapterelement und eine solche Haltevorrichtung, die eine schnelle und einfache Montage und Auswechslung des Luftentölelements, insbesondere bei beengten Platzverhältnissen, ermöglichen.

### Stand der Technik

Bei Vakuumpumpen, insbesondere bei Ölvakuumpumpen, wie zum Beispiel Drehschieberpumpen, muss das durch die Pumpe geförderte Fluid, das aus einem Gemisch aus Schmierstoff und Gas besteht, vor dem Austritt aus der Pumpe gefiltert werden. Im weiteren Verlauf wird des einfacheren Verständnisses wegen anstelle von Fluid der Begriff Luft verwendet. Durch geeignete Luftentölelemente wird der Schmierstoff in das Schmiersystem zurückgeführt und die verbleibende gereinigte Luft ausgestossen. Die Luftentölelemente, die in den Pumpen mit dafür konzipierten Adapterelementen und Haltervorrichtungen gehalten werden, müssen in regelmässigen Abständen gewechselt werden, da sie sonst mit der Zeit ihre Filterkapazität verlieren.

Bei bekannten Pumpen und Haltervorrichtungen ist die Auswechslung der Luftentölelemente aufwendig. Insbesondere müssen dabei oft einige Komponenten, die mit dem Luftentölelement verbunden sind, demontiert werden. Diese Bauteile sind dann wieder für die Montage und den Einbau des neuen Luftentölelements notwendig. Dies ist einerseits aufwendig und andererseits oft mit Verschmutzungen verbunden, da die Bauteile mit Schmiermittel bedeckt sind. Darüber hinaus sind die bekannten Adapterelemente, d.h. die Elemente der Haltervorrichtungen, welche die Verbindung zwischen dem Luftentölelement und der Haltervorrichtung erstellen, zu starr, um eine einfache Montage zu ermöglichen.

Die internationale Anmeldung WO 2018/197614 schlägt eine Haltevorrichtung für ein Luftentölelement vor, welche die oben genannten Schwierigkeiten teilweise löst. Obwohl diese Vorrichtung eine etwas einfachere Montage des Luftentölelements als bei anderen bekannten Vorrichtungen ermöglicht und vor allem Verschmutzungen verhindert, ist eine einfache Montage mit dieser Vorrichtung nicht immer möglich. Eine Montage des Luftentölelements mit dieser Vorrichtung, und den anderen bekannten Vorrichtungen, ist insbesondere bei sehr beengten Platzverhältnissen, die oft eine Montage mit einer einzigen Hand erfordern, sehr schwierig. Bei beengtem Einbauraum der Vakuumpumpe, speziell in der Richtung, in die das Luftentölelement beim Wechsel aus der Pumpe herauszuführen ist, ist die Ausführung der für den Wechsel erforderlichen Tätigkeiten und die Kontrolle der korrekten Position der Teile nach erfolgtem Wiedereinbau schwierig bzw. sehr aufwändig. Darüber hinaus offenbart die internationale Anmeldung WO 2018/197614 ein Adapterelement, das starr mit dem Luftentölelement zusammenwirkt, was die Montage zusätzlich erschwert.

Ausgehend vom Stand der Technik liegt der vorliegenden Erfindung daher die Aufgabe zugrunde, vorbesagte Nachteile der bekannten Vorrichtungen zu überwinden und ein Adapterelement sowie eine Haltevorrichtung für ein Luftentölelement für Vakuumpumpen, insbesondere für Ölvakuumpumpen, vorzuschlagen, die eine einfache Montage und Auswechslung des Luftentölelements ermöglicht.

### Zusammenfassung der Erfindung

Gemäss der vorliegenden Erfindung werden diese Ziele vor allem durch die Elemente der zwei unabhängigen Ansprüche erreicht. Weitere vorteilhafte Ausführungsformen gehen ausserdem aus den abhängigen Ansprüchen und der Beschreibung hervor.

Insbesondere wird die Aufgabe der vorliegenden Erfindung gemäss einem ersten Aspekt der Erfindung gelöst durch ein Adapterelement für eine Haltervorrichtung für ein Luftentölelement einer Vakuumpumpe, umfassend einen ersten zylindrischen Abschnitt mit einem ersten Durchmesser und einen zur Aufnahme des Luftentölelements ausgebildeten zweiten zylindrischen Abschnitt mit einem zweiten Durchmesser, wobei der erste Durchmesser gleich oder kleiner als der zweite Durchmesser ist, wobei der zweite zylindrische Abschnitt umlaufende Aussparungen aufweist, die mindestens drei parallel zur Längsachse des Adapterelements ausgerichtete, gleichmässig oder ungleichmässig über den Umfang des zweiten zylindrischen Abschnitts verteilte, Fixierungsfinger bilden, und wobei mindestens zwei Fixierungsfinger elastisch radial verschiebbar gelagert sind.

Dank dem Adapterelement gemäss der vorliegenden Erfindung ist es möglich, die Haltevorrichtung und das Luftentölelement sehr einfach zu montieren. Insbesondere das Vorliegen von mindestens zwei elastischen und radial verschiebbaren Fixierungsfingern macht die Montage und Demontage besonders einfach und sicher. Darüber hinaus lässt sich das Adapterelement platzsparend ausbilden. Die umlaufenden Aussparungen ermöglichen eine optimale Zirkulation der aus Luftentölelements austretenden Luft. Dadurch kann sich zwischen dem Luftentölelement und dem Adapterelement kein Überdruck bilden, was die einwandfreie Funktionsfähigkeit der Pumpe beeinträchtigen würde.

In einer ersten bevorzugten Ausführungsform des ersten Aspekts der vorliegenden Erfindung ist der Durchmesser des ersten zylindrischen Abschnitts kleiner als der Durchmesser des zweiten zylindrischen Abschnitts, und das Adapterelement weist zwischen dem ersten zylindrischen Abschnitt und dem zweiten zylindrischen Abschnitt einen konischen Abschnitt auf. Dies hat den Vorteil, dass sich der strömungsrelevante Querschnitt des Adapters verkleinert und die auszustossende Luft ohne zusätzliche strömungstechnische Verluste zu den Auslassbohrungen geleitet wird.

In einer zweiten bevorzugten Ausführungsform des ersten Aspekts der vorliegenden Erfindung weist der konische Abschnitt des Adapterelements mindestens eine, vorteilhafterweise mindestens drei, vorzugsweise mindestens fünf, umlaufende Aussparungen auf. Dadurch wird die Zirkulation, der aus dem Luftentölelement austretenden Luft, noch verbessert. Insbesondere bei grösseren Abmessungen ist aus Gründen der Festigkeit bzw. der Stabilität des Adapterelementes die Anzahl der Aussparungen auf sechs oder mehr zu erhöhen.

Erreicht werden die Ziele der vorliegenden Erfindung gemäss einem zweiten Aspekt auch durch eine Haltevorrichtung für ein Luftentölelement einer Vakuumpumpe, insbesondere einer Ölvakuumpumpe, umfassend:
▪ ein Adapterelement zur Aufnahme eines Luftentölelements;
▪ einen Abluftdeckel, wobei der Abluftdeckel an das Gehäuse der Vakuumpumpe zur Abdichtung eines Abluftlochs befestigbar ist; und
▪ eine zwischen dem Adapterelement und den Abluftdeckel angeordnete Spiralfeder;
wobei die Haltevorrichtung Begrenzungsmittel zur Beschränkung des Abstands zwischen dem Adapterelement und dem Abluftdeckel umfasst.

Dank einer solchen Struktur der erfindungsgemässen Haltevorrichtung ist die Montage des Luftentölelements und der Haltevorrichtung an das Gehäuse der Vakuumpumpe besonders einfach. Die Begrenzungsmittel gewährleisten, dass der Abluftdeckel und das Adapterelement eine Einheit bilden, so dass sich beide Elemente während der Montage nicht voneinander trennen können. Eine solche Vorrichtung ist besonders vorteilhaft in Situationen, wo die Platzverhältnisse für die Montage sehr eng sind, was zum Beispiel der Fall ist, wenn die Pumpe in einem Pumpenstand eingebaut ist. In solchen Fällen ist es besonders wichtig, dass die Montage mit nur einer Hand erfolgen kann. Darüber hinaus und dank der Spiralfeder kann ein optimaler Druck auf das Luftentölelement ausgeübt werden, so dass dieses Element im Gehäuse richtig gehalten und gelagert wird. Eine gefederte Lagerung des Luftentölelements ist wichtig, um die Vibrationen der Pumpe dämpfen zu können und die den Teilen anhaftenden, fertigungsbedingten Massschwankungen zu kompensieren.

In einer ersten bevorzugten Ausführungsform des zweiten Aspekts der vorliegenden Erfindung ist das Adapterelement ein Adapterelement gemäss dem ersten Aspekt der vorliegenden Erfindung. Dadurch ist die Orientierung der Halterung gegenüber dem Pumpengehäuse und dem Luftentölelement für die Montage unwichtig, was diese nochmals vereinfacht.

In einer zweiten bevorzugten Ausführungsform des zweiten Aspekts der vorliegenden Erfindung sind das Adapterelement, der Abluftdeckel und die Spiralfeder koaxial angeordnet. Dadurch ist die Orientierung der Halterung gegenüber dem Pumpengehäuse und dem Luftentölelement für die Montage unwichtig, was diese nochmals vereinfacht.

In einer anderen bevorzugten Ausführungsform des zweiten Aspekts der vorliegenden Erfindung ist das Adapterelement gegenüber dem Abluftdeckel frei drehbar. Dadurch kann sich die Orientierung des Adapterelements an die genaue Geometrie des Luftentölelements anpassen. Das ist wichtig in Fällen, in denen das Luftentölelement entweder nicht symmetrisch ist oder in denen er über Mittel verfügt, um eine falsche Installation zu verhindern.

In einer weiteren bevorzugten Ausführungsform des zweiten Aspekts der vorliegenden Erfindung sind die Begrenzungsmittel in Form einer Schraube, deren Schraubenkopf auf der Luftseite des Abluftdeckels angeordnet ist, und welche auf ihrem zylindrischen Körper auf der dem Schraubenkopf gegenüberliegenden Seite Arretierungsmittel, vorzugsweise abtrennbare Arretierungsmittel, umfasst. Eine Schraube stellt eine besonders einfache Ausführung für die Begrenzungsmittel dar. Darüber hinaus sind abtrennbare Arretierungsmittel besonders vorteilhaft, da dadurch die Haltevorrichtung als Bausatz konzipiert ist. Das Adapterelement oder die Spiralfeder können daher bei Bedarf ausgetauscht werden. Das Adapterelement kann daher auch nach der genauen Bauart des Luftentölelements gewählt werden. Die Spiralfeder kann ausgewechselt werden, wenn sie, zum Beispiel, ihre Federfunktion nicht mehr wie gewünscht erfüllen kann.

In einer weiteren bevorzugten Ausführungsform des zweiten Aspekts der vorliegenden Erfindung ist der Abstand zwischen den Arretierungsmitteln und dem Abluftdeckel justierbar. Dadurch kann die die Haltevorrichtung an die Geometrie des Pumpengehäuses angepasst und die Vorspannung der Spiralfeder auch justiert werden. Die Justierung des Abstands zwischen den Arretierungsmitteln und dem Abluftdeckel kann mittels eines geeigneten Bauteils, wie zum Beispiel einer Kontermutter, realisiert werden.

In einer anderen bevorzugten Ausführungsform des zweiten Aspekts der vorliegenden Erfindung sind die Arretierungsmittel in Form eines O-Rings. Ein O-Ring hat den Vorteil, dass er preiswert und leicht zu montieren bzw. zu ersetzen ist. Darüber hinaus besitzt ein O-Ring auch eine gewisse Elastizität, was bei entspannter Spiralfeder vorteilhaft sein kann.

In noch einer anderen bevorzugten Ausführungsform des zweiten Aspekts der vorliegenden Erfindung umfasst die Haltevorrichtung, zwischen Schraubenkopf und Abluftdeckel, eine gummielastische Platte, vorzugsweise aus einem Elastomer, und zwischen Schraubenkopf und gummielastischer Platte eine Abluftdeckelfeder, vorteilhaferweise in Form eines Federsterns. Dank der Abluftdeckelfeder kann die gummielastische Platte so an den Abluftdeckel gedrückt werden, dass die Auslassbohrungen im Abluftdeckel verschlossen werden. Ein Federstern hat den Vorteil, dass die Anpresskraft der Feder gleichmässig auf mehrere Punkte auf einer Kreislinie auf die gummielastische Platte verteilt wird. Die gummielastische Platte hat den Vorteil, dass die ausströmende Luft die Platte vom Abluftdeckel öffnen kann, um die Auslassbohrungen zu öffnen, und Platte unter Wirkung der Federkraft der Abluftdeckelfeder in die ursprüngliche Lage zurückkehren kann, um die Auslassbohrungen wieder zu verschliessen. Dabei ist keine Relativbewegung der Teile zueinander erforderlich, was einen mechanischen Verschleiss der Teile ausschliesst.

In einer anderen bevorzugten Ausführungsform des zweiten Aspekts der vorliegenden Erfindung weist der Abluftdeckel auf seiner Vakuumseite eine Nut zur Aufnahme eines O-Rings auf, wobei die Nut derart ausgebildet ist, dass sich ein in der Nut eingelegter O-Ring vom Abluftdeckel nicht lösen kann.

Dadurch wird die Montage besonders vereinfacht. Bei der Montage einer Haltevorrichtung für ein Luftentölelement, vor allem bei beengten Platzverhältnissen, ist es besonders vorteilhaft, wenn gewährleistet werden kann, dass sich der O-Ring bei den während der Montage üblicher Weise auftretenden Bewegungen und Kräften nicht vom Abluftdeckel lösen kann.

In noch einer anderen bevorzugten Ausführungsform des zweiten Aspekts der vorliegenden Erfindung ist die Nut an mindestens zwei Stellen schikanenförmig ausgebildet. Eine schikanenförmige Nut gewährleistet, dass sich der O-Ring bei den während der Montage üblicher Weise auftretenden Bewegungen und Kräften nicht aus der Nut lösen kann, ohne dass die Form der Nut die Dichtungsfähigkeit des O-Rings beeinträchtigt.

Weitere Einzelheiten der Erfindung gehen aus der nun folgenden Beschreibung der bevorzugten Ausführungsform der Erfindung hervor, welche in den beigelegten Zeichnungen dargestellt ist. Aus der Beschreibung lassen sich auch die weiteren Vorteile der vorliegenden Erfindung entnehmen sowie Anregungen und Vorschläge, wie die Erfindungsgegenstände im Rahmen des Beanspruchten abgeändert oder auch weiterentwickelt werden könnte.

### Kurzbeschreibung der Zeichnungen

Figur 1 zeigt eine Schnittansicht einer Vakuumpumpe, eines Adapterelements und einer Haltevorrichtung für ein Luftentölelement gemäss einer bevorzugten Ausführungsform der Haltevorrichtung und des Adapterelements der vorliegenden Erfindung;
Figur 2 zeigt eine Schnittansicht eines Luftentölelements, eines Adapterelements und einer Haltevorrichtung gemäss der bevorzugten Ausführungsform der vorliegenden Erfindung;
Figur 3 zeigt eine perspektivische Schnittansicht eines Luftentölelements, eines Adapterelements und einer Haltevorrichtung gemäss der bevorzugten Ausführungsform der vorliegenden Erfindung;
Figur 4 zeigt den Abluftdeckel der Haltevorrichtung gemäss der bevorzugten Ausführungsform der vorliegenden Erfindung;
Figur 4a zeigt eine Detailansicht des Abluftdeckels der Haltevorrichtung gemäss der bevorzugten Ausführungsform der vorliegenden Erfindung; und
Figur 5 zeigt eine perspektivische Ansicht des Adapterelements und der Haltevorrichtung gemäss der bevorzugten Ausführungsform der vorliegenden Erfindung.

### Bevorzugte Ausführungsformen der Erfindung

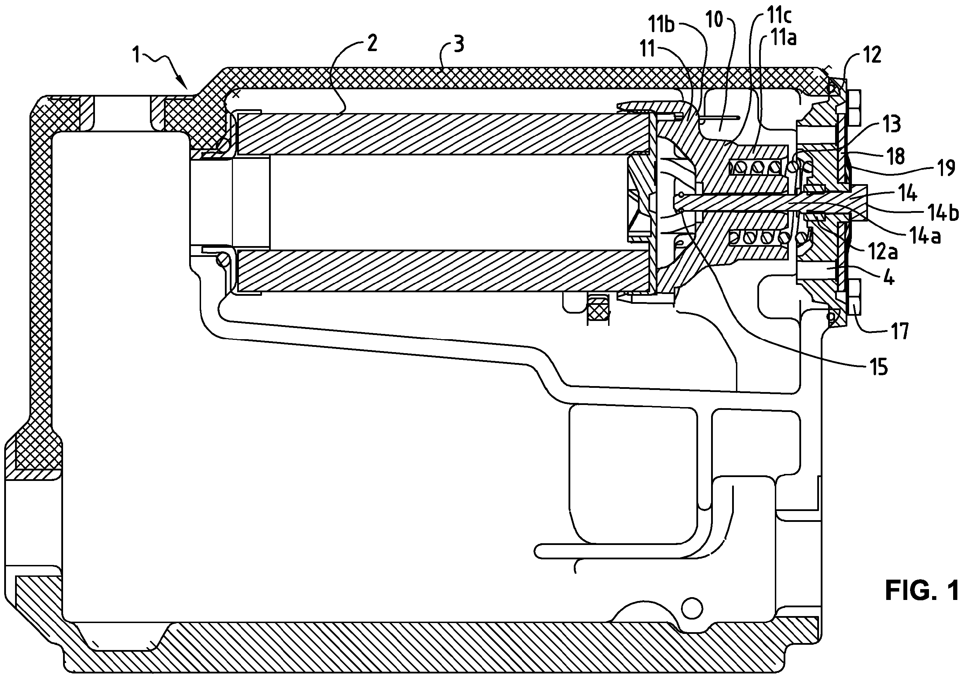

Figur 1 zeigt eine Schnittansicht einer Vakuumpumpe 1 mit einem Luftentölelement 2 und einer Haltevorrichtung 10 gemäss einer bevorzugten Ausführungsform der vorliegenden Erfindung. Die Haltevorrichtung 10 ist so konzipiert, dass sie das Luftentölelement festhält und gleichzeitig dessen Auswechslung ermöglicht.

Die Haltevorrichtung 10 umfasst in dieser Ausführungsform ein Adapterelement 11 zur Aufnahme des Luftentölelements 2 gemäss der vorliegenden Erfindung. Wichtig zu beachten ist jedoch, dass die Haltevorrichtung auch ein aus dem Stand der Technik bekanntes Adapterelement anstatt eines Adapterelement gemäss der vorliegenden Erfindung umfassen kann. Details über das Adapterelement werden weiter unten erläutert.

Die Haltevorrichtung 10 umfasst darüber hinaus einen Abluftdeckel 12 zur Abdichtung eines Abluftlochs 4 im Gehäuse 3 der Pumpe 1 und eine zwischen dem Adapterelement 11 und dem Abluftdeckel 12 angerordnete Spiralfeder 13. Ferner sind Begrenzungsmittel 14, hier in Form einer Schraube, vorgesehen, um den maximalen Abstand zwischen dem Adapterelement 11 und dem Abluftdeckel 12 zu begrenzen. Dafür weist die Schraube 14 auf ihrem zylindrischen Körper 14a Arretierungsmittel 15 auf, hier in Form eines O-Rings. In der hier dargestellten Ausführungsform ist der O-Ring in einer im zylindrischen Körper 14a der Schraube 14 dafür ausgebildeten Nut angeordnet. Der Vorteil eines O-Rings liegt darin, dass er sehr einfach von der Schraube 14 trennbar ist, was das Auseinandernehmen der Haltevorrichtung 10 ermöglicht. Wichtig zu beachten ist, dass der maximale Abstand zwischen dem Adapterelement 11 und dem Abluftdeckel 12 vorteilhafterweise mittels eines geeigneten Bauteiles (hier nicht gezeigt), zum Beispiel einer Kontermutter, justiert werden kann.

Das Adapterelement 11 ist vorteilhafterweise um den zylindrischen Körper 14a der Schraube 14 frei drehbar. Damit kann die Drehposition des Adapterelements 11 gegenüber dem Luftentölelement 2 angepasst werden. Das ist besonders vorteilhaft, wenn das Adapterelement 11 beim Anbringen der Haltevorrichtung 10 an die Pumpe 1 zwingend eine bestimmte Drehposition gegenüber dem Luftentölelement 2 annehmen muss.

Dank der Spiralfeder 13 und dem Abluftdeckel 12 kann die Haltevorrichtung 10 gegen das Luftentölelement 2 mit dem nötigen Anpressdruck drücken, so dass das Luftentölelement 2 sicher im Gehäuse 3 der Pumpe 1 gelagert ist.

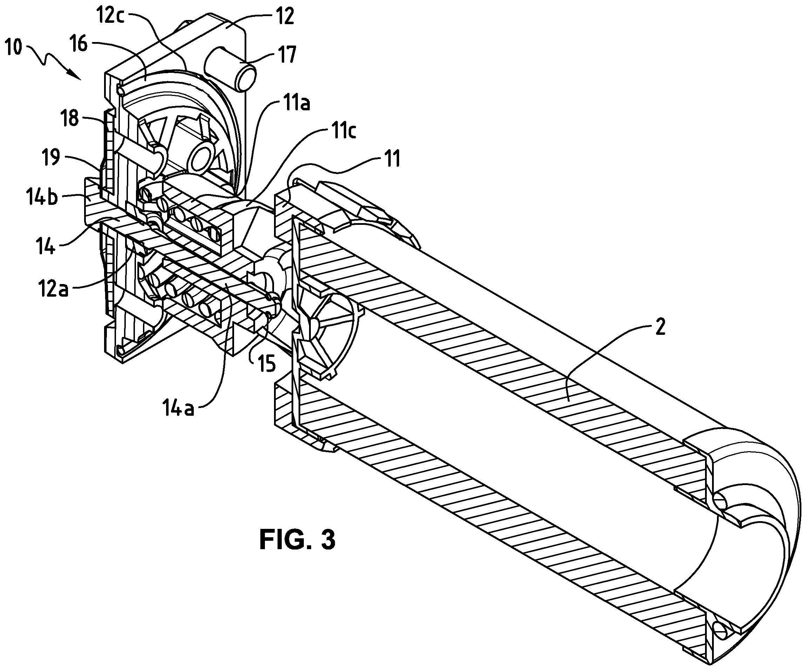

Wie am besten aus der Figur 3 zu entnehmen ist, verfügt der Abluftdeckel 12 über eine Nut 12c zur Aufnahme eines O-Rings 16. Darüber hinaus sind Halteschrauben 17 für das Befestigen der Haltevorrichtung 10 an das Gehäuse 3 der Pumpe 2 vorgesehen.

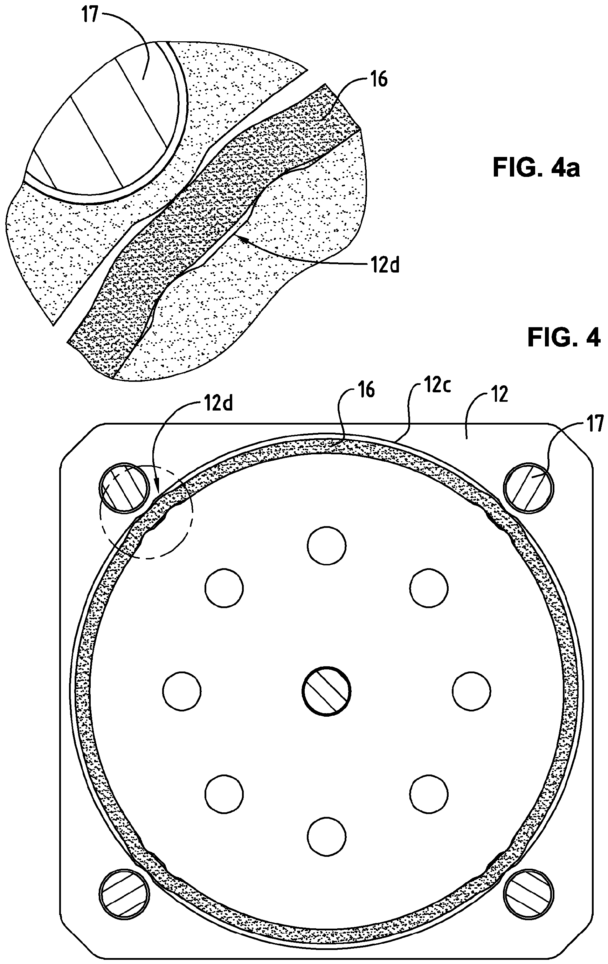

Figur 4 zeigt die Vakuumseite des Abluftdeckels 12 in mehr Details. Vorteilhafterweise ist die Nut 12c zur Aufnahme des O-Rings 16 an mindestens zwei Stellen, hier sind es vier, schikanenförmig ausgebildet (siehe auch Figur 4a). Dank diesen schikanenförmigen Stellen 12d wird der O-Ring 16 in der Nut 12c gehalten und kann sich vom Abluftdeckel 12 von sich aus nicht lösen. Das Festhalten des O-Rings 16 ermöglicht eine einfache Montage der Haltevorrichtung 10 an das Gehäuse 3, da die Gefahr des Herunterfallens des O-Rings 16 stark reduziert ist.

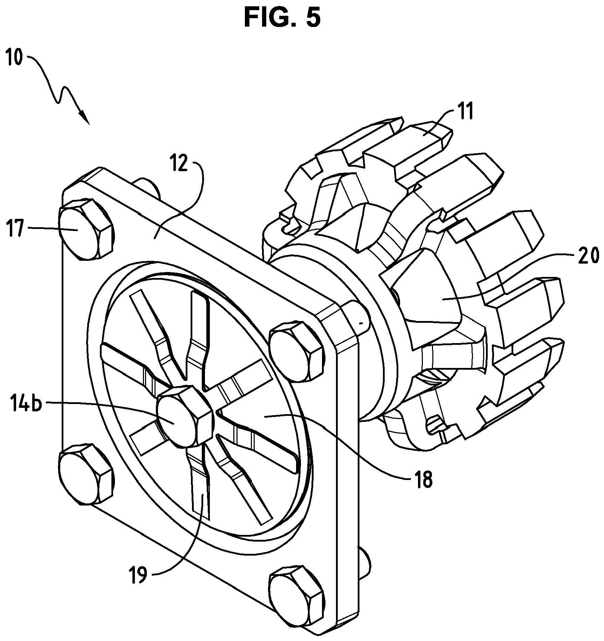

Wie in Figur 5 gezeigt, verfügt die Haltevorrichtung 10 über eine Platte aus Elastomer 18 und eine Sternefeder 19 zwischen dem Schraubenkopf 14b der Schraube 14 und dem Abluftdeckel 12. Die Sternefeder 19 hat den Vorteil, dass die Anpresskraft der Feder gleichmässig auf mehrere Punkte auf einer Kreislinie auf die gummielastische Platte 18 verteilt wird. Die Platte aus Elastomer 18 hat ihrerseits den Vorteil, dass die ausströmende Luft die Platte vom Abluftdeckel öffnen kann, um die Auslassbohrungen zu öffnen, und Platte unter Wirkung der Federkraft der Sternefeder 19 in die ursprüngliche Lage zurücckehren kann, um die Auslassbohrungen wieder zu verschliessen. Dabei ist keine Relativbewegung der Teile zueinander erforderlich, was einen mechanischen Verschleiss der Teile ausschliesst.

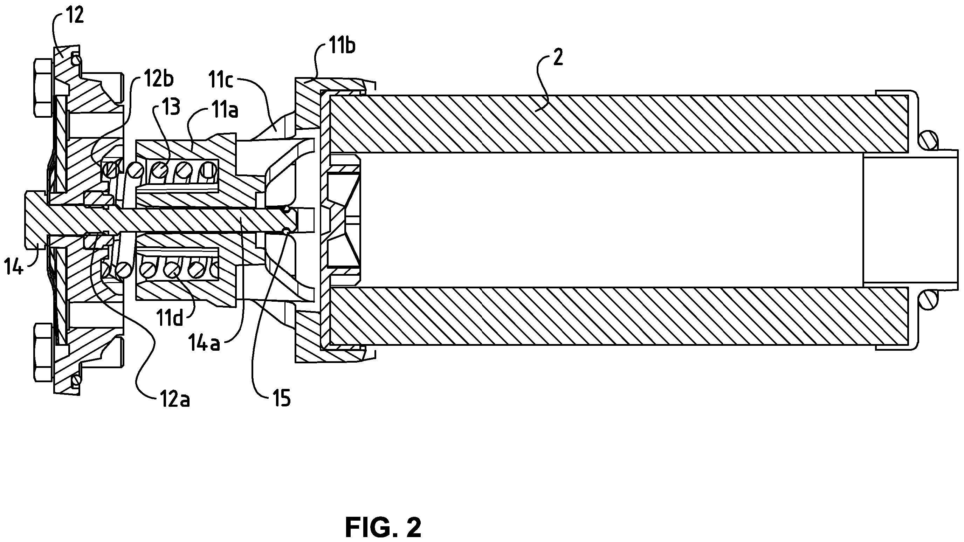

Das Adapterelement 11 umfasst in der in den Figuren 1 bis 5 gezeigten bevorzugten Ausführungsform einen ersten zylindrischen Abschnitt 11a und einen zweiten zylindrischen Abschnitt 11b sowie zwischen den zwei zylindrischen Abschnitten einen konischen Abschnitt 11c. Der zweite zylindrische Abschnitt 11b weist Fixierungsfinger 11e bildende Aussparungen auf. Die Fixierungsfinger 11e ermöglichen die Aufnahme des Luftentölelements 2 und die Aussparungen eine bessere Zirkulation der aus dem Filter austretenden Luft. Mindestens zwei, in dieser Ausführungsform vier, Fixierungsfinger 11f sind elastisch radial verschiebbar gelagert.

Diese Fixierungsfinger 11f sind vorteilhaft zur Längsachse vom Adapterelement 11 geneigt, wenn das Luftentölelement 2 nicht vorhanden ist. Wenn das Luftentölelement 2 in das Adapterelement 11 eingeführt wird, werden die Fixierungsfinger 11f dann radial nach aussen bewegt. Dies ermöglicht eine einfache Aufnahme des Luftentölelements durch das Adapterelement und gewährleistet gleichzeitig einen optimalen Halt. Darüber hinaus dämpfen die elastische gelagerten Fixierungsfinger 11f die beim Betrieb der Pumpe auftretenden Schwingungen. Wie in den Figuren zu sehen ist, sind die Fixierungsfinger abgeschrägt, um ein leichtes Einführen vom Luftentölelement 2 in das Adapterelement 11 zu ermöglichen.

Wie in Figur 5 ersichtlich weist der konische Abschnitt 11c auch Aussparungen 20 auf, um eine bessere Zirkulation der aus dem Luftentölelement 2 austretenden Luft zu ermöglichen. Darüber hinaus weist der erste zylindrische Abschnitt 11a des Adapters 11 vorteilhafterweise eine Vertiefung 11d zur Aufnahme der Spiralfeder 13 auf. Dadurch wird die Spiralfeder 13 optimal geführt und kann sich in radialer Richtung nicht deformieren. Gleichermassen weist der Abluftdeckel 12 seinerseits vorteilweise auch eine Vertiefung 12b zur Aufnahme der Spiralfeder 13 auf.

Wichtig zu beachten ist, dass sowohl das Adapterelement 11 als auch die Haltevorrichtung 10 für sich allein erfinderisch und vorteilhaft sind, obwohl sie in den Figuren stets in Kombination dargestellt sind. Mit anderen Worten kann das Adapterelement 11 auch in Kombination mit schon aus dem Stand der Technik bekannten Haltevorrichtungen verwendet werden. Gleiches gilt für die Haltevorrichtung 10, die ohne weiteres auch ein aus dem Stand der Technik bekanntes Adapterelement umfassen kann. Obwohl die Haltevorrichtung 10 und das Adapterelement 11 schon für sich genommen vorteilhaft sind, haben sie zusammen auch eine synergistische Wirkung. Die Kombination eines Adapterelements 11 mit einer Haltevorrichtung 10 gemäss der vorliegenden Erfindung ermöglicht nämlich eine besondere einfache Montage.

Zum Schluss sei nochmals darauf hingewiesen, dass die hier beispielhaft beschriebenen Ausführungsformen nur Realisierungsmöglichkeiten der erfindungsgemässen Ideen darstellen und keinesfalls als limitierend angesehen werden sollen. Der Fachmann wird verstehen, dass noch andere Implementierungen der Erfindung und weitere Elemente möglich sind, ohne dass die wesentlichen Merkmale der Erfindung vernachlässigt werden.

## Patentansprüche

1. Adapterelement (11) für eine Haltervorrichtung für ein Luftentölelement einer Vakuumpumpe (1), umfassend einen ersten zylindrischen Abschnitt (11a) mit einem ersten Durchmesser und einen zur Aufnahme des Luftentölelements (2) ausgebildeten zweiten zylindrischen Abschnitt (11b) mit einem zweiten Durchmesser, wobei der erste Durchmesser gleich oder kleiner als der zweite Durchmesser ist und wobei der zweite zylindrische Abschnitt (11b) umlaufende Aussparungen aufweist, die mindestens drei parallel zur Längsachse des Adapterelements ausgerichtete, gleichmässig oder ungleichmässig über den Umfang des zweiten zylindrischen Abschnitts (11b) verteilte, Fixierungsfinger (11e) bilden,
**dadurch gekennzeichnet, dass**
mindestens zwei Fixierungsfinger (11f) elastisch radial verschiebbar gelagert sind.

2. Adapterelement gemäss Anspruch 1, wobei der Durchmesser des ersten zylindrischen Abschnitts (11a) kleiner als der Durchmesser des zweiten zylindrischen Abschnitts (11b) ist, und wobei das Adapterelement (11) zwischen dem ersten zylindrischen Abschnitt (11a) und dem zweiten zylindrischen Abschnitt (11b) einen konischen Abschnitt (11c) aufweist.

3. Adapterelement gemäss Anspruch 2, wobei der konische Abschnitt (11c) des Adapterelements (11) mindestens eine, vorteilhafterweise mindestens drei, vorzugsweise mindestens fünf, umlaufende Aussparungen aufweist.

4. Haltevorrichtung (10) für ein Luftentölelement (2) einer Vakuumpumpe (1), insbesondere einer Ölvakuumpumpe, umfassend:
▪ ein Adapterelement (11) zur Aufnahme eines Luftentölelements (2);
▪ einen Abluftdeckel (12), wobei der Abluftdeckel (12) an das Gehäuse der Vakuumpumpe zur Abdichtung eines Abluftlochs (4) befestigbar ist; und
▪ eine zwischen Adapterelement (11) und Abluftdeckel (12) angeordnete Spiralfeder (13);
**dadurch gekennzeichnet,**
**dass** die Haltevorrichtung (10) Begrenzungsmittel (14) zur Beschränkung des Abstands zwischen dem Adapterelement (11) und Abluftdeckel (12) umfasst.

5. Haltevorrichtung (10) gemäss Anspruch 4, wobei das Adapterelement (11) ein Adapterelement gemäss einem der Ansprüche 1 bis 3 ist.

6. Haltevorrichtung (10) gemäss einem der Ansprüche 4 oder 5, wobei Adapterelement (11), Abluftdeckel (12) und Spiralfeder (13) koaxial angeordnet sind.

7. Haltevorrichtung (10) gemäss einem der Ansprüche 4 bis 6, wobei das Adapterelement (11) gegenüber dem Abluftdeckel (4) frei drehbar ist.

8. Haltevorrichtung gemäss einem der Ansprüche 4 bis 7, wobei die Begrenzungsmittel (14) in Form einer Schraube sind, deren Schraubenkopf (14b) auf der Luftseite des Abluftdeckels (12) angeordnet ist und welche auf ihrem zylindrischen Körper (14a) auf der dem Schraubenkopf (14b) gegenüberliegende Seite Arretierungsmittel (15), vorzugsweise abtrennbare Arretierungsmittel, umfasst.

9. Haltevorrichtung (10) gemäss Anspruch 8, wobei der Abstand zwischen Arretierungsmittel (15) und Abluftdeckel (12) justierbar ist.

10. Haltevorrichtung (10) gemäss einem der Ansprüche 8 oder 9, wobei die Arretierungsmittel (15) in Form eines O-Rings sind.

11. Haltevorrichtung (10) gemäss einem der Ansprüche 8 bis 10, umfassend, zwischen Schraubenkopf (14b) und Abluftdeckel (14), eine gummielastische Platte (18), vorzugsweise aus einem Elastomer, und zwischen Schraubenkopf (14b) und gummielastischer Platte (18) eine Abluftdeckelfeder (19), vorteilhaferweise in Form eines Federsterns.

12. Haltevorrichtung (10) gemäss einem der Ansprüche 8 bis 11, wobei der Abluftdeckel (14) auf seiner Vakuumseite eine Nut (12c) zur Aufnahme eines O-Rings (16) aufweist, wobei die Nut derart ausgebildet ist, dass sich ein in der Nut (12c) eingelegter O-Ring (16) vom Abluftdeckel (14) nicht lösen kann.

13. Haltevorrichtung (10) gemäss Anspruch 12, wobei die Nut (12c) an mindestens zwei Stellen (12d) schikanenförmig ausgebildet ist.
